# EUROPEAN PATENT SPECIFICATION

(11) **EP 3 500 044 B1**
(45) Date of publication and mention of the grant of the patent: **06.10.2021**
(21) Application number: 17838471.5
(22) Date of filing: 30.06.2017
(51) Int. Cl.: H04W 76/18, H04W 76/19, H04W 76/27

(54) **METHODS AND DEVICE FOR PROCESSING A RADIO BEARER DURING RESUME**
VERARBEITUNGSVERFAHREN UND -VORRICHTUNG FÜR FUNKTRÄGER WÄHREND FORTSETZUNG
PROCÉDÉS ET DISPOSITIF DE TRAITEMENT POUR UN SUPPORT RADIOÉLECTRIQUE LORS DE REPRISE

(30) Priority: 10.08.2016 CN 201610659184
(43) Date of publication of application: 19.06.2019
(73) Proprietor: ZTE Corporation, Shenzhen, Guangdong 518057 (CN)
(72) Inventor: YU, Yuanfang, Shenzhen Guangdong 518057 (CN); GAO, Yin, Shenzhen Guangdong 518057 (CN); LU, Ting, Shenzhen Guangdong 518057 (CN)
(74) Representative: Aipex B.V.
(86) International application number: PCT/CN2017/091336
(87) International publication number: WO 2018/028341

(56) References cited:
- EP-A1- 2 645 803
- WO-A1-2012/031507
- CN-A- 101 682 864
- CN-A- 102 340 886
- CN-A- 103 460 733
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.2.0, 11 July 2016 (2016-07-11), pages 1-623, XP051123115, [retrieved on 2016-07-11]

## Description

### TECHNICAL FIELD

The present invention relates to the field of communications and, in particular, to methods and device for processing a radio bearer.

### BACKGROUND

Machine to Machine (M2M) communications are an important topic of current researches in the fifth generation (5G) mobile communication technologies and an important application of wireless communications in the future. Strict power consumption requirements are proposed for most M2M terminals to support longer standby time.

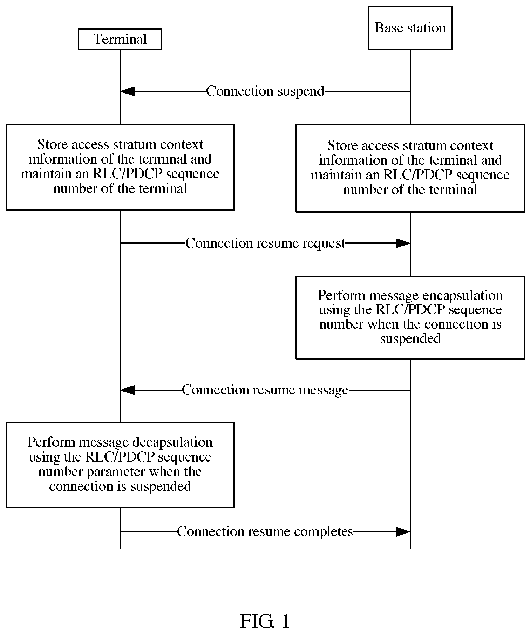

In the existing art, if the data transmission is completed, a terminal may suspend a radio connection in response to the triggering by a base station. FIG. 1 is a schematic diagram of an existing radio connection resume method when a base station is unchanged. As shown in FIG. 1, the existing method includes storing terminal-related access stratum context information and a resume identification for recovering the radio connection, suspending a signaling radio bearer (SRB) and a data radio bearer (DRB) and the like, but a reset operation is not performed on an air interface radio link control (RLC) module and a packet data convergence protocol (PDCP) module of the radio bearer (such as the SRB) for the data transmission.

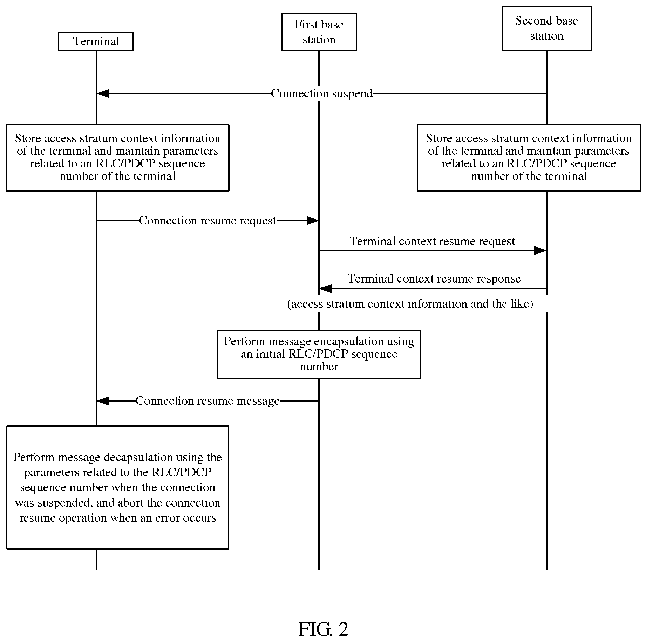

FIG. 2 is a schematic diagram of an existing radio connection resume method when a base station is changed. As shown in FIG. 2, when a terminal moves to a coverage region of a new base station and performs radio connection resume, the RLC module and the PDCP module on the radio bearer for the data transmission between the terminal and the new base station have inconsistent state parameters which may result in a connection resume failure of the terminal. Therefore, the terminal must use more signaling for interaction to establish an access radio bearer, causing increased power consumption of the terminal. The parameter of the RLC module is related to an RLC sequence number, includes a state variable maintained by an RLC receiver (such as a sequence number of the next RLC data packet to be received, a sequence number of the RLC data packet following a RLC data packet which triggered reordering), a state variable maintained by an RLC transmitter (such as the sequence number following the sequence number of the RLC data packet with the highest sequence number among RLC data packets correctly received by the RLC transmitter, and a sequence number of the next newly-generated RLC data packet) and other related parameters. For details, refer to the 3GPP TS36.322 protocol. The parameter of the PDCP module is related to a PDCP sequence number and a superframe number, includes a state variable maintained by a PDCP receiver (such as a sequence number of the next PDCP data packet to be received and a superframe number of the next PDCP data packet to be received), a state variable maintained by a PDCP transmitter (such as a sequence number of the next PDCP data packet to be transmitted and a superframe number of the next PDCP data packet to be transmitted) and other related parameters. For details, refer to the 3GPP TS36.323 protocol.

No effective solution has been proposed for the problem in the existing art that the base station and the terminal do not have a consistent RLC parameter and a consistent PDCP parameter on a radio bearer between the terminal and the base station resulting in a connection resume failure of the terminal, so the terminal needs more signaling interactions to establish the radio bearer which causes increased power consumption of the terminal. Further relevant technologies are also known from EP 2645803 A1 (BLACKBERRY LTD [CA]) 2 October 2013 (2013-10-02), which relates to a method, mobile device and radio access network RAN disclosed for suspending and re-establishing a radio resource control connection, and "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD; 3GPP TS 36.331,3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RANWG2, no. V13.2.0, 11 July 2016 (2016-07-11), pages 1 -623, XP051123115, [retrieved on 2016-07-11 ], which relates to 3rd Generation Partnership Project; Technical Specification Group Radio Access Network; Evolved Universal Terrestrial Radio Access (E-UTRA); Radio Resource Control (RRC); Protocol specification (Release 13).

### SUMMARY

The feature of the method and apparatus according to the present invention are defined in the independent claims. Further improvements are provided in the dependent claims.

Embodiments of the present invention provide methods and device for processing a radio bearer to solve at least the problem in the existing art that the base station and the terminal do not have a consistent RLC parameter and a consistent PDCP parameter on a radio bearer between the terminal and the base station resulting in a connection resume failure of the terminal, so the terminal needs more signaling interactions to establish the radio bearer which causes increased power consumption of the terminal.

An embodiment of the present invention provides a method for processing a radio bearer, including the steps described below.

The terminal sets the radio bearer parameter to the preset value in a process of the terminal initiating a radio connection resume. The process of initiating a radio connection resume by the terminal includes that the terminal sends a radio connection resume request to the base station and waits for a connection resume response from the base station.

The radio bearer parameter includes at least one of a radio link control (RLC) parameter and a packet data convergence protocol (PDCP) parameter.

After the terminal sets the radio bearer parameter to the preset value, the method further includes that the terminal performs data transmission and reception by using the set radio bearer parameter.

Another embodiment of the present invention provides a method for processing a radio bearer, including the steps described below.

The base station sets the radio bearer parameter to the preset value in a process of performing a radio connection resume. The performing a radio connection resume by the base station includes that the base station receives a connection resume request sent by the terminal and sends a connection resume response to the terminal.

The radio bearer parameter includes at least one of a radio link control (RLC) parameter and a packet data convergence protocol (PDCP) parameter.

After the base station sets the radio bearer parameter to the preset value, the method further includes the step described below.

Another embodiment of the present invention provides a device for processing a radio bearer, applied to a terminal. The device includes a first setting module or a second setting module.

The second setting module is configured to set the radio bearer parameter to the preset value in a process of initiating a radio connection resume. The process of initiating a radio connection resume includes that the terminal sends a radio connection resume request to the base station and waits for a connection resume response from the base station.

The device further includes a first transceiver module.

The first transceiver module is configured to perform data transmission and reception by using the set radio bearer parameter of the terminal.

According to the embodiments of the present invention, in the interaction of the terminal and the base station (for example, after the terminal receives the connection suspend instruction sent by the base station or in the process of initiating the radio connection resume by the terminal), the terminal and the base station set the radio bearer parameter including the RLC parameter and the PDCP parameter to the preset value according to the connection suspend instruction. The present invention solves the problem in the existing art that the base station and the terminal do not have a consistent RLC parameter and a consistent PDCP parameter on a radio bearer between the terminal and the base station resulting in a connection resume failure of the terminal, so the terminal needs more signaling interactions to establish the radio bearer which causes increased power consumption of the terminal, and ensures a consistent radio bearer parameter between the terminal and the base station, thereby improving a success rate of the connection resume between the terminal and the base station and avoiding more signaling interactions required by the terminal to establish the radio bearer.

### BRIEF DESCRIPTION OF DRAWINGS

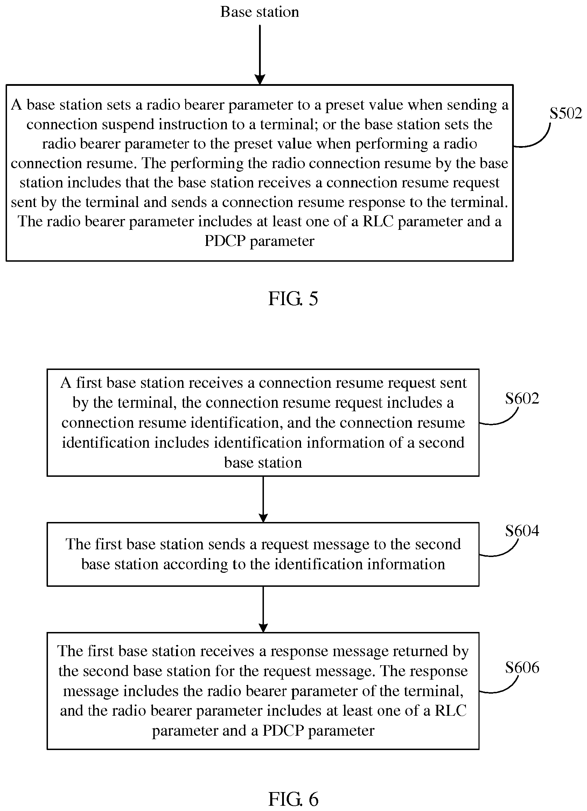

In the following drawings, FIGS. 6, 9, 11-12, 15 and 18 are examples of the non-claimed inventions and thus are not part of the claimed invention.

The drawings described herein are used to provide a further understanding of the present invention and form a part of the present application. The exemplary embodiments and descriptions thereof in the present invention are used to explain the present invention and not to limit the present invention in any improper way. In the drawings:
FIG. 1 is a schematic diagram of a method for recovering a radio connection when a base station is unchanged in the related art;
FIG. 2 is a schematic diagram of a method for recovering a radio connection when a base station is changed in the related art;
FIG. 3 is a block diagram showing a hardware configuration of a wireless communication terminal executing a method for processing a radio bearer according to an embodiment of the present invention;
FIG. 4 is a flowchart of a method for processing a radio bearer on a terminal side according to an embodiment 1 of the present invention;
FIG. 5 is a flowchart of a method for processing a radio bearer on a base station side according to the embodiment 1 of the present invention;
FIG. 6 is a flowchart of a method for processing a radio bearer on a first base station side not being part of the present invention;
FIG. 7 is a block diagram 1 of a device for processing a radio bearer applied to a terminal side according to an embodiment 2 of the present invention;
FIG. 8 is a block diagram 2 of the device for processing the radio bearer applied to the terminal side according to the embodiment 2 of the present invention;
FIG. 9 is a block diagram 1 of a device for processing a radio bearer applied to a base station side not being part of the present invention;
FIG. 10 is a block diagram 2 of the device for processing the radio bearer applied to the base station side according to the embodiment 2 of the present invention;
FIG. 11 is a block diagram 1 of a device for processing a radio bearer applied to a terminal side not being part of the present invention;
FIG. 12 is a block diagram 2 of the device for processing the radio bearer applied to the first base station not being part of the present invention;
FIG. 13 is a flowchart of a method for processing a radio bearer according to a preferred embodiment 1 of the present invention;
FIG. 14 is a flowchart of a method for processing a radio bearer according to a preferred embodiment 2 of the present invention;
FIG. 15 is a flowchart of a method for processing a radio bearer not being part of the present invention;
FIG. 16 is a block diagram of a terminal according to an embodiment 4 of the present invention;
FIG. 17 is a block diagram of a base station according to the embodiment 4 of the present invention; and
FIG. 18 is a block diagram of a first base not being part of the present invention.

### DETAILED DESCRIPTION

Hereinafter the present invention will be described in detail with reference to the drawings in conjunction with embodiments. It is to be noted that if not in collision, the embodiments and features therein in the present application may be combined with each other.

It is to be noted that the terms "first", "second" and the like in the description, claims and drawings of the present invention are used to distinguish between similar objects and are not necessarily used to describe a particular order or sequence. It should be understood that the data used in this way is interchangeable where appropriate so that embodiments of the present invention described herein may also be implemented in a sequence not illustrated or described herein. In addition, the terms "including", "having" or any other variations thereof described herein are intended to encompass a non-exclusive inclusion. For example, a process, method, system, product or device that includes a series of steps or units may include not only the expressly listed steps or units but also other steps or units that are not expressly listed or are inherent to such a process, method, system, product or device.

### Embodiment 1

An embodiment of the present invention provides a method for processing a radio bearer. It is to be noted that the steps illustrated in the flowcharts in the drawings may be performed by a computer system such as a group of computers capable of executing instructions, and although logical sequences are illustrated in the flowcharts, the illustrated or described steps may be performed in sequences different from those described herein in some cases.

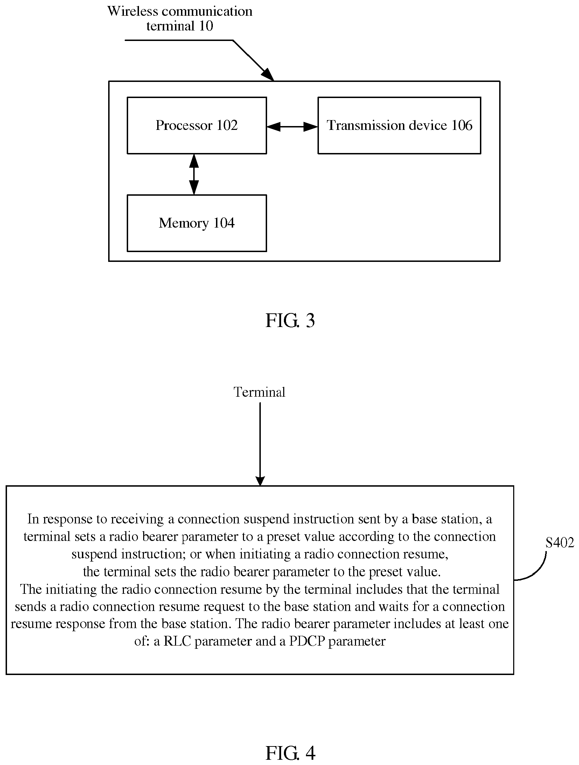

The method embodiment provided by the embodiment 1 of the present application may be executed on a mobile terminal, a wireless communication terminal or other similar computing devices. An example in which the method embodiment is executed on the wireless communication terminal is described below. FIG. 3 is a block diagram showing a hardware configuration of a wireless communication terminal for executing a method for processing a radio bearer according to an embodiment of the present invention. As shown in FIG. 3, the wireless communication terminal 10 may include one or more (only one is shown in FIG. 3) processors 102 (which may include, but are not limited to, a processing device such as a microprocessor MCU or a programmable logic device FPGA), a memory 104 for storing data and a transmission module 106 for a communication function. It should be understood by those skilled in the art that the structure shown in FIG. 3 is merely illustrative and not intended to limit the structure of the electronic device described above. For example, the wireless communication terminal 10 may further include more or less components than the components shown in FIG. 3, or has a configuration different from the configuration shown in FIG. 3.

The memory 104 may be configured to store software programs and modules of application software, such as program instructions/modules corresponding to the method for processing the radio bearer in the embodiment of the present invention. The processor 102 executes the software programs and modules stored in the memory 104 so as to perform various function applications and data processing, that is, to implement the method for processing a radio bearer described above. The memory 104 may include a high-speed random access memory, and may further include a nonvolatile memory, such as one or more magnetic storage devices, flash memories or other nonvolatile solid-state memories. In some examples, the memory 104 may further include memories that are remotely disposed with respect to the processors 102. These remote memories may be connected to the wireless communication terminal 10 via a network. Examples of the network described above include, but are not limited to, the Internet, an intranet, a local area network, a mobile communication network and a combination thereof.

The transmission device 106 is configured to receive and transmit data via a network. Specific examples of the network may include a wireless network provided by a communication provider of the wireless communication terminal 10. In one example, the transmission device 106 includes a network interface controller (NIC), which may be connected to other network devices via a base station and thus be capable of communicating with the Internet. In one example, the transmission device 106 may be a radio frequency (RF) module, which is used for communicating with the Internet in a wireless way.

In the above operating environment, the present application provides a method for processing a radio bearer as shown in FIG. 4. FIG. 4 is a flowchart of a method for processing a radio bearer on a terminal side according to an embodiment 1 of the present invention. As shown in FIG. 4, the method includes the step described below.

In step S402, in response to receiving a connection suspend instruction sent by a base station, a terminal sets a radio bearer parameter to a preset value according to the connection suspend instruction; or when initiating a radio connection resume, the terminal sets the radio bearer parameter to the preset value. The process of initiating the radio connection resume by the terminal includes that the terminal sends a radio connection resume request to the base station and waits for a connection resume response from the base station. The radio bearer parameter includes at least one of a radio link control (RLC) parameter and a packet data convergence protocol (PDCP) parameter.

It is to be noted that the terminal may set the radio bearer parameter to the preset value before sending the radio connection resume request, or set the radio bearer parameter to the preset value after sending the radio connection resume request, which is not limited in the embodiment of the present invention.

In the above step, the terminal sets the radio bearer parameter to the preset value according to the connection suspend instruction after receiving the connection suspend instruction sent by the base station; or the terminal sets the radio bearer parameter including the RLC parameter and the PDCP parameter to the preset value in the process of initiating the radio connection resume by the terminal. The method solves the problem in the existing art that the inconsistency of the RLC parameter and the inconsistency of the PDCP parameter on a radio bearer between the terminal and the base station lead to a connection resume failure of the terminal, so the terminal needs more signaling interactions to establish the radio bearer which causes increased power consumption of the terminal, and the method ensures a consistent radio bearer parameter between the terminal and the base station, thereby improving a success rate of the connection resume between the terminal and the base station and avoiding more signaling interactions required by the terminal to establish the radio bearer.

In a preferred embodiment of the present invention, after the terminal sets the radio bearer parameter to the preset value, the terminal performs data transmission and reception by using the set radio bearer parameter, which specifically includes at least one of the operations described below.

The terminal checks received data by using a set RLC parameter.

The terminal performs RLC encapsulation on data to be transmitted by using the set RLC parameter.

The terminal checks the received data by using a set PDCP parameter.

The terminal performs PDCP encapsulation on the data to be transmitted by using the set PDCP parameter.

Preferably, the RLC parameter includes a parameter related to an RLC sequence number; and the PDCP parameter includes a parameter related to a PDCP sequence number and a parameter related to a superframe number.

For a better understanding of the present invention, the embodiment of the present invention further provides a method for processing a radio bearer on a base station side corresponding to the method for processing the radio bearer on the terminal side described above. FIG. 5 is a flowchart of a method for processing a radio bearer on a base station side according to the embodiment 1 of the present invention. As shown in FIG. 5, the method includes the step described below.

In S502, a base station sets a radio bearer parameter to a preset value in a process of sending a connection suspend instruction to a terminal (for example, the base station may set the radio bearer parameter to the preset value after sending the radio connection suspend instruction); or the base station sets the radio bearer parameter to the preset value in a process of performing a radio connection resume. The process of performing the radio connection resume by the base station includes that the base station receives a connection resume request sent by the terminal and sends a connection resume response to the terminal (for example, the terminal may set the radio bearer parameter to the preset value after receiving the radio connection resume request). The radio bearer parameter includes at least one of a radio link control (RLC) parameter and a packet data convergence protocol (PDCP) parameter.

In the above step, the base station sets the radio bearer parameter to the preset value in the process of sending the connection suspend instruction to the terminal; or the base station sets the radio bearer parameter to the preset value in the process of performing the radio connection resume. The method solves the problem in the existing art that the inconsistency of the RLC parameter and the inconsistency of the PDCP parameter on a radio bearer between the terminal and the base station lead to a connection resume failure of the terminal, so the terminal needs more signaling interactions to establish the radio bearer which causes increased power consumption of the terminal, and the method ensures a consistent radio bearer parameter between the terminal and the base station, thereby improving a success rate of the connection resume between the terminal and the base station and avoiding more signaling interactions required by the terminal to establish the radio bearer.

In a preferred embodiment of the present invention, after the base station sets the radio bearer parameter to the preset value, the base station performs data transmission and reception by using the set radio bearer parameter, which specifically includes at least one of the operations described below.

The base station checks received data by using a set RLC parameter.

The base station performs RLC encapsulation on data to be transmitted by using the set RLC parameter.

The base station checks the received data by using a set PDCP parameter.

The base station performs PDCP encapsulation on the data to be transmitted by using the set PDCP parameter.

Preferably, the RLC parameter includes a parameter related to an RLC sequence number; and the PDCP parameter includes a parameter related to a PDCP sequence number and a parameter related to a superframe number.

FIG. 6 and the description thereof relate to an example of the non-claimed inventions and thus are not part of the claimed invention.

For a better understanding of the present invention, the embodiment of the present invention further provides a method for processing a radio bearer on a first base station side corresponding to the method for processing the radio bearer on the terminal side described above. FIG. 6 is a flowchart of a method for processing a radio bearer on a first base station side according to the embodiment 1 of the present invention. As shown in FIG. 6, after a terminal suspends a radio connection under a second base station, the terminal moves into a coverage region of the first base station and starts a radio connection resume process, the first base station needs to acquire a radio bearer parameter of the terminal, such that the radio bearer parameter at the first base station is consistent with the radio bearer parameter of the terminal. The method mainly includes the steps described below.

In S602, the first base station receives a connection resume request sent by the terminal; where the connection resume request includes a connection resume identification including identification information of the second base station.

In S604, the first base station sends a request message to the second base station according to the identification information.

In S606, the first base station receives a response message returned by the second base station with respect to the request message. The response message includes the radio bearer parameter of the terminal. The radio bearer parameter includes at least one of a radio link control (RLC) parameter and a packet data convergence protocol (PDCP) parameter.

In a preferred embodiment of the present invention, after the first base station receives the response message returned by the second base station with respect to the request message, the method further includes the steps described below.

The first base station performs data transmission and reception according to the RLC parameter in the response message.

The first base station performs the data transmission and reception according to the PDCP parameter in the response message.

Specifically, the step in which the first base station performs the data transmission and reception according to the RLC parameter in the response message mainly includes that the first base station checks data received from the terminal according to the RLC parameter in the response message; and/or the first base station performs RLC encapsulation on data to be transmitted to the terminal according to the RLC parameter in the response message.

Specifically, the step in which the first base station performs the data transmission and reception according to the PDCP parameter in the response message mainly includes that the first base station checks the data received from the terminal according to the PDCP parameter in the response message; and/or the first base station performs PDCP encapsulation on the data to be transmitted to the terminal according to the PDCP parameter in the response message.

Preferably, the RLC parameter includes a parameter related to an RLC sequence number; and the PDCP parameter includes a parameter related to a PDCP sequence number and a parameter related to a superframe number.

It is to be noted that in the present invention, the terminal, the base station or the first base station resets the radio bearer parameter to an initial value or sets the radio bearer parameter to an agreed preset value.

In the embodiment of the present invention, for the data to be transmitted by the terminal side, the terminal, as a transmitter, needs to perform encapsulation; while a connection resume message sent by the base station is a received message for the terminal, so the terminal perform the corresponding decapsulation/check.

From the description of the embodiment described above, it will be apparent to those skilled in the art that the method in the embodiment described above may be implemented by software plus a necessary general-purpose hardware platform, or may of course be implemented by hardware. However, in many cases, the former is a preferred implementation mode. Based on this understanding, the solution provided by the present invention substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, etc.) to execute the method according to each embodiment of the present invention.

### Embodiment 2

An embodiment of the present invention further provides a device for processing a radio bearer for implementing the method for processing the radio bearer in the above-mentioned embodiment and preferred embodiments. As used below, the term "module" may be software, hardware or a combination thereof capable of implementing predetermined functions. The device in the embodiment described below is preferably implemented by software, but implementation by hardware or by a combination of software and hardware is also possible and conceived.

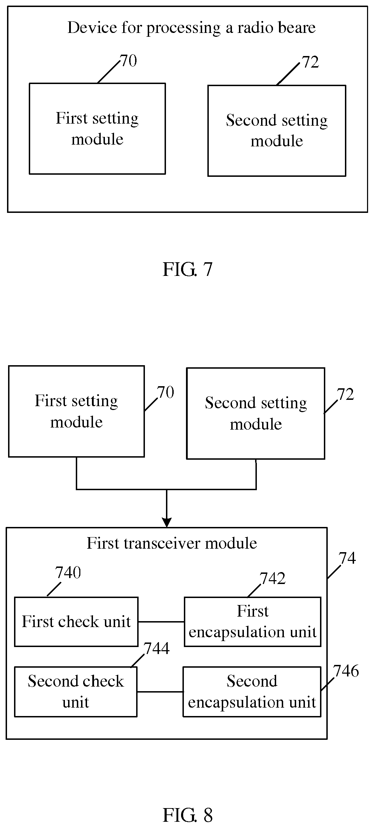

The embodiment of the present invention provides a device for processing a radio bearer applied to a terminal, which is mainly configured to implement the method for processing the radio bearer on the terminal side in the embodiment 1. FIG. 7 is a block diagram 1 of a device for processing a radio bearer applied to a terminal side according to an embodiment 2 of the present invention. As shown in FIG. 7, the device includes:
A first setting module 70, which is configured to, after receiving a connection suspend signal sent by a base station, set a radio bearer parameter to a preset value according to an instruction of the connection suspend signal. The radio bearer parameter includes at least one of a radio link control (RLC) parameter and a packet data convergence protocol (PDCP) parameter;
a second setting module 72, which is configured to set the radio bearer parameter to the preset value in a process of initiating a radio connection resume. The process of initiating the radio connection resume includes that the terminal sends a radio connection resume request to the base station and waits for a connection resume response of the base station.

In the above device, the first setting module 70 sets the radio bearer parameter to the preset value according to the instruction of the connection suspend signal after receiving the connection suspend signal sent by the base station; or the second setting module 72 sets the radio bearer parameter to the preset value in the process of initiating the radio connection resume. The device solves the problem in the existing art that the inconsistency of the RLC parameter and the inconsistency of the PDCP parameter on a radio bearer between the terminal and the base station lead to a connection resume failure of the terminal, so the terminal needs more signaling interactions to establish the radio bearer which causes increased power consumption of the terminal, and the method ensures a consistent radio bearer parameter between the terminal and the base station, thereby improving a success rate of the connection resume between the terminal and the base station and avoiding more signaling interactions required by the terminal to establish the radio bearer.

FIG. 8 is a block diagram 2 of the device for processing the radio bearer applied to the terminal side according to the embodiment 2 of the present invention. As shown in FIG. 8, in a preferred implementation mode of the embodiment of the present invention, the device further includes a first transceiver module 74.

The first transceiver module 74 is configured to perform data transmission and reception by using the set radio bearer parameter of the terminal.

The first transceiver module 74 includes a first check unit 740, a first encapsulation unit 742, a second check unit 744 and a second encapsulation unit 746.

The first check unit 740 is configured to check received data by using a set RLC parameter.

The first encapsulation unit 742 is configured to perform RLC encapsulation on data to be transmitted by using the set RLC parameter.

The second check unit 744 is configured to check the received data by using a set PDCP parameter.

The second encapsulation unit 746 is configured to perform PDCP encapsulation on data transmitted to a lower layer by using the set PDCP parameter.

Preferably, the RLC parameter includes a parameter related to an RLC sequence number; and the PDCP parameter includes a parameter related to a PDCP sequence number and a parameter related to a superframe number.

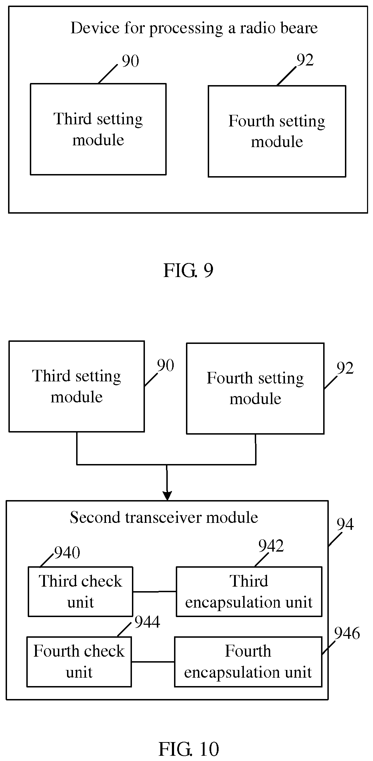

FIG. 9 and the description thereof relate to an example of the non-claimed inventions and thus are not part of the claimed invention.

The embodiment of the present invention further provides a device for processing a radio bearer applied to a base station, which is mainly configured to implement the method for processing the radio bearer on the base station side in the embodiment 1. FIG. 9 is a block diagram 1 of a device applied to a base station side and for processing a radio bearer according to the embodiment 2 of the present invention. As shown in FIG. 9, the device includes a third setting module 90 and a fourth setting module 92.

The third setting module 90 is configured to set a radio bearer parameter to a preset value when sending a connection suspend signal to a terminal. The radio bearer parameter includes at least one of a radio link control (RLC) parameter and a packet data convergence protocol (PDCP) parameter.

The fourth setting module 92 is configured to set the radio bearer parameter to the preset value in a process of performing a radio connection resume. The process of performing the radio connection resume includes that the base station receives a connection resume request sent by the terminal and sends a connection resume response to the terminal.

FIG. 10 is a block diagram 2 of the device for processing the radio bearer applied to the base station side according to the embodiment 2 of the present invention. As shown in FIG. 10, in a preferred implementation mode of the embodiment of the present invention, the device further includes a second transceiver module 94.

The second transceiver module 94 is configured to perform data transmission and reception by using the set radio bearer parameter of the base station.

The second transceiver module 94 includes a third check unit 940, a third encapsulation unit 942, a fourth check unit 944 and a fourth encapsulation unit 946.

The third check unit 940 is configured to check received data by using a set RLC parameter.

The third encapsulation unit 942 is configured to perform RLC encapsulation on data to be transmitted by using the set RLC parameter.

The fourth check unit 944 is configured to check the received data by using a set PDCP parameter.

The fourth encapsulation unit 946 is configured to perform PDCP encapsulation on data transmitted to a lower layer by using the set PDCP parameter.

Preferably, the RLC parameter includes a parameter related to an RLC sequence number; and the PDCP parameter includes a parameter related to a PDCP sequence number and a parameter related to a superframe number.

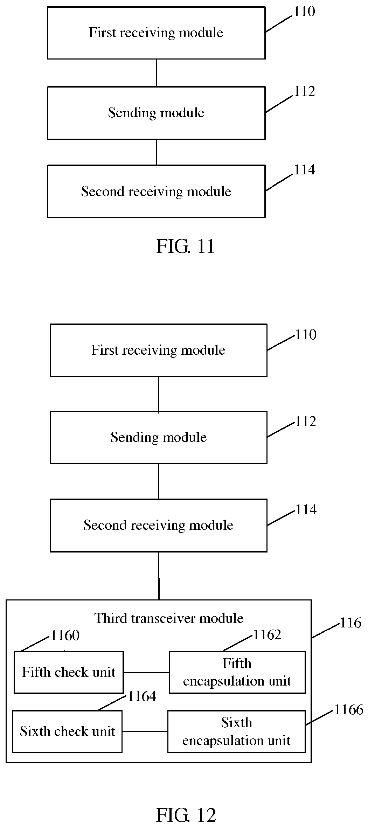

FIG. 11 and the description thereof relate to an example of the non-claimed inventions and thus are not part of the claimed invention.

The embodiment of the present invention further provides a device for processing a radio bearer applied to a first base station, which is mainly configured to implement the method for processing the radio bearer on the first base station side in the embodiment 1. FIG. 11 is a block diagram 1 of a device for processing a radio bearer applied to the terminal side according to the embodiment 2 of the present invention. As shown in FIG. 11, the device includes a first receiving module 110, a sending module 112 and a second receiving module 114.

The first receiving module 110 is configured to receive a connection resume request sent by a terminal. The connection resume request includes a connection resume identification including identification information of a second base station.

The sending module 112 is configured to send a request message to the second base station according to the identification information of the second base station.

The second receiving module 114 is configured to receive a response message returned by the second base station for the request message. The response message includes a radio bearer parameter of the terminal, and the radio bearer parameter includes at least one of a radio link control (RLC) parameter and a packet data convergence protocol (PDCP) parameter.

FIG. 12 and the description thereof relate to an example of the non-claimed inventions and thus are not part of the claimed invention.

FIG. 12 is a block diagram 2 of the device for processing the radio bearer applied to the first base station side according to the embodiment 2 of the present invention. As shown in FIG. 12, in a preferred implementation mode of the embodiment of the present invention, the device further includes a third transceiver module 116.

The third transceiver module 116 is configured to perform data transmission and reception according to the RLC parameter in the response message.

Moreover, the third transceiver module 116 is configured to perform the data transmission and reception according to the PDCP parameter in the response message.

The third transceiver module 116 includes a fifth check unit 1160, a fifth encapsulation unit 1162, a sixth check unit 1164 and a sixth encapsulation unit 1166.

The fifth check unit 1160 is configured to check received data according to the RLC parameter in the response message.

The fifth encapsulation unit 1162 is configured to perform RLC encapsulation on data to be transmitted according to the RLC parameter in the response message.

The sixth check unit 1164 is configured to check the received data according to the PDCP parameter in the response message.

The sixth encapsulation unit 1166 is configured to perform PDCP encapsulation on the data to be transmitted according to the PDCP parameter in the response message.

Preferably, the RLC parameter includes a parameter related to an RLC sequence number; and the PDCP parameter includes a parameter related to a PDCP sequence number and a parameter related to a superframe number.

It is to be noted that in the embodiment of the present invention, the terminal, the base station or the first base station may reset the radio bearer parameter to an initial value or may set the radio bearer parameter to an agreed preset value, which is not limited in the embodiment of the present invention.

For a better understanding of the technical solutions of the present invention, an embodiment of the present invention further provides a terminal including any device for processing the radio bearer applied to the terminal described above. The embodiment of the present invention further provides a base station including any device for processing the radio bearer applied to the base station described above. The embodiment of the present invention further provides a base station including any device for processing the radio bearer applied to the first base station described above.

### Embodiment 3

For a better understanding of the technical solutions of the present invention, the method for processing the radio bearer described above is described specifically through preferred embodiments below.

### Preferred embodiment 1

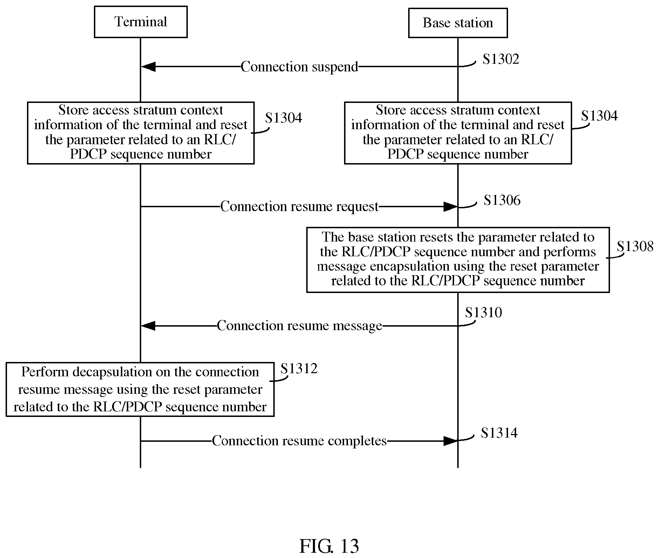

FIG. 13 is a flowchart of a method for processing a radio bearer according to a preferred embodiment 1 of the present invention. As shown in FIG. 13, the method includes steps described below.

In step S1302, after data transmission is completed, a base station sends a connection suspend instruction to a terminal.

In step S1304, a base station side stores access stratum context information of the terminal and resets parameters related to an RLC/PDCP sequence number. After receiving the connection suspend instruction sent by the base station, the terminal stores the access stratum context information of the terminal and resets the parameters related to the RLC/PDCP sequence number on the terminal side.

In step S1306, when the terminal needs to recover a radio connection, the terminal initiates a connection resume request to the base station.

In step S1308, in response to receiving the connection resume request sent by the terminal, the base station performs message encapsulation by using the reset parameters related to the RLC/PDCP sequence number.

In step S1310, the base station feeds back a connection resume message to the terminal.

In step S1312, the terminal performs decapsulation on the connection resume message by using the reset parameter related to the RLC/PDCP sequence number.

In step S1314, the radio connection between the terminal and the base station is recovered.

### Preferred embodiment 2

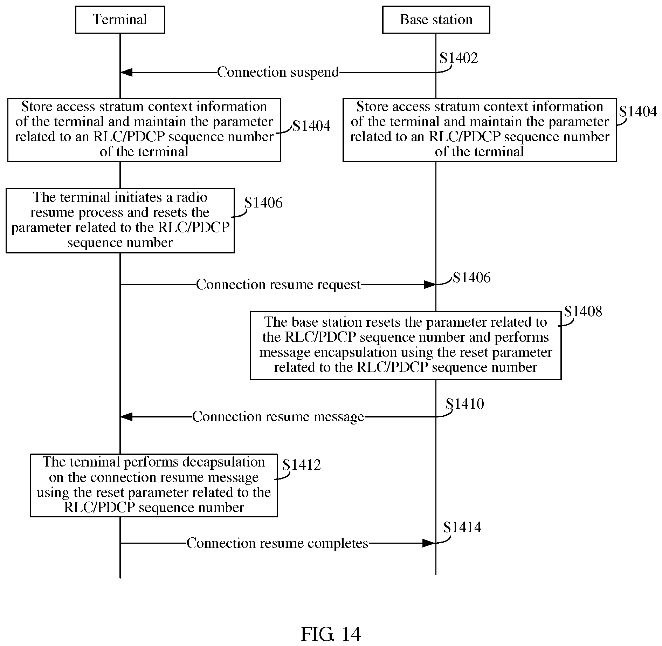

FIG. 14 is a flowchart of a method for processing a radio bearer according to a preferred embodiment 2 of the present invention. As shown in FIG. 14, the method includes steps described below.

In step S1402, after data transmission is completed, a base station sends a connection suspend instruction to a terminal.

In step S1404, a base station side stores access stratum context information of the terminal and maintains parameters related to an RLC/PDCP sequence number and a parameter related to a superframe number of the terminal. After receiving the connection suspend instruction sent by the base station, the terminal stores the access stratum context information of the terminal and maintains the parameters related to the RLC/PDCP sequence number and the parameter related to the superframe number of the terminal.

In step S1406, when the terminal needs to recover the radio connection, the terminal sends a connection resume request to the base station and resets the parameters related to the RLC/PDCP sequence number and the parameter related to the superframe number on the terminal side. It is to be noted that the terminal resets the parameters related to the RLC/PDCP sequence number and the parameter related to the superframe number in a process of initiating the connection resume. The terminal may reset the parameters related to the RLC/PDCP sequence number and the parameter related to the superframe number before initiating the connection resume request or after initiating the connection resume request or simultaneously with initiating the connection resume request.

In step S1408, after receiving the connection resume request sent by the terminal, the base station resets the parameters related to the RLC/PDCP sequence number and the parameter related to the superframe number and performs message encapsulation by using the reset RLC/PDCP sequence number.

In step S1410, the base station sends a connection resume message to the terminal. The connection resume message is equivalent to a feedback message of the connection resume request of the terminal.

In step S1412, the terminal performs decapsulation on the connection resume message by using the reset parameter related to the RLC/PDCP sequence number and reset parameter related to the superframe number.

In step S1414, the radio connection between the terminal and the base station is recovered.

### Preferred embodiment 3

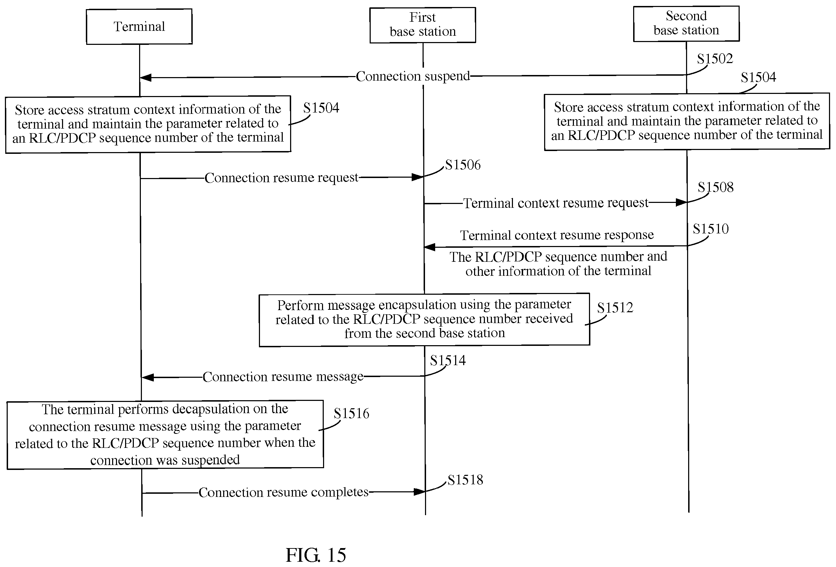

The preferred embodiment 3 and FIG. 15 relate to an example of the non-claimed inventions and thus are not part of the claimed invention.

FIG. 15 is a flowchart of a method for processing a radio bearer according to a preferred embodiment 3 of the present invention. As shown in FIG. 15, after a terminal suspends a connection in a coverage region of a second base station, the terminal moves to a coverage region of a first base station and starts a connection resume process, the method includes the steps described below.

In step S1502, after data transmission is completed, the second base station sends a connection suspend instruction to the terminal.

In step S1504, the second base station stores access stratum context information of the terminal and maintains parameters related to an RLC/PDCP sequence number and a parameter related to a superframe number of the terminal. After receiving the connection suspend instruction sent by the second base station, the terminal stores the access stratum context information of the terminal and maintains the parameters related to the RLC/PDCP sequence number and the parameter related to the superframe number locally.

In step S1506, when the terminal moves to the coverage region of the first base station and performs the radio connection resume, the terminal sends a connection resume request to the first base station. The connection resume request includes identification information of the second base station.

In step S1508, the first base station sends a terminal context resume request to the second base station according to the identification information of the second base station.

In step S1510, after receiving the terminal context resume request, the second base station feeds back a terminal context resume response to the first base station. The terminal context resume response includes the parameters related to the RLC/PDCP sequence number and the parameter related to the superframe number and other information of the terminal.

In step S1512, the first base station performs message encapsulation by using RLC/PDCP sequence number related state parameters received from the second base station.

In step S1514, the first base station feeds back a connection resume message to the terminal.

In step S1516, the terminal performs decapsulation on the connection resume message by using RLC/PDCP sequence number related state parameters saved during the connection suspend.

In step S1518, a radio connection between the terminal and the first base station is recovered.

The above are the preferred embodiments of the present invention and mainly used to explain the technical solutions in the embodiments 1 and 2 of the present invention. Any variations and modifications of the order of steps made based on the preferred embodiments are conceivable.

### Embodiment 4

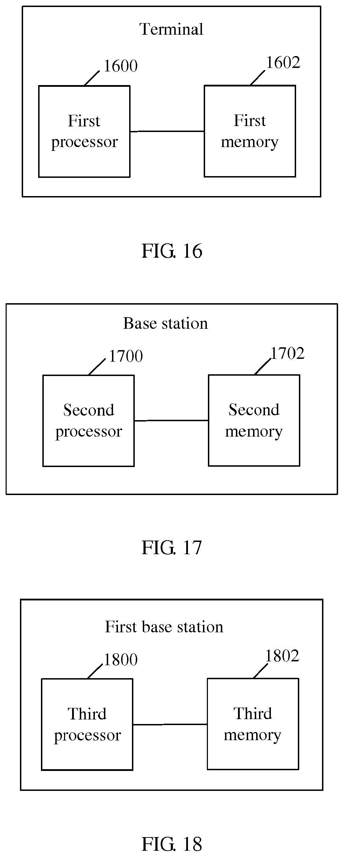

For a better understanding of the technical solutions of the present invention, an embodiment of the present invention further provides a terminal. FIG. 16 is a block diagram of a terminal according to an embodiment 4 of the present invention. As shown in FIG. 16, the terminal in the embodiment of the present invention includes:
a first processor 1600; and
a first memory 1602, configured to store instructions executable by the first processor 1600.

The first processor 1600 is configured to perform, according to the instructions sored in the first memory 1602, the following operation.
after receiving a connection suspend instruction sent by a base station, setting a radio bearer parameter to a preset value according to the connection suspend instruction;
alternatively, setting the radio bearer parameter to the preset value in a process of initiating a radio connection resume. The process of initiating the radio connection resume by the terminal includes that the terminal sends a radio connection resume request to the base station and waits for a connection resume response from the base station.

The radio bearer parameter includes at least one of a radio link control (RLC) parameter and a packet data convergence protocol (PDCP) parameter.

In a preferred implementation mode of the embodiment, the first processor is further configured to perform at least one of the following operations: checking received data by using a set RLC parameter; performing RLC encapsulation on data to be transmitted by using the set RLC parameter; checking the received data by using a set PDCP parameter; and performing PDCP encapsulation on the data to be transmitted by using the set PDCP parameter.

The embodiment of the present invention further provides a base station. FIG. 17 is a block diagram of a base station according to the embodiment 4 of the present invention. As shown in FIG. 17, the base station in the embodiment of the present invention includes:
a second processor 1700; and
a second memory 1702, configured to store instructions executable by the second processor 1700.

The second processor 1700 is configured to perform, according to the instructions sored in the second memory 1702, the following operation:
setting a radio bearer parameter to a preset value in a process of sending a connection suspend instruction to a terminal;
alternatively, setting the radio bearer parameter to the preset value in a process of performing a radio connection resume. The process of performing the radio connection resume by the base station includes that the base station receives a connection resume request sent by the terminal and sends a connection resume response to the terminal.

The radio bearer parameter includes at least one of a radio link control (RLC) parameter and a packet data convergence protocol (PDCP) parameter.

In a preferred implementation mode of the embodiment, the second processor is further configured to perform at least one of the following operations: checking received data by using a set RLC parameter; performing RLC encapsulation on data to be transmitted by using the set RLC parameter; checking the received data by using a set PDCP parameter; and performing PDCP encapsulation on the data to be transmitted by using the set PDCP parameter.

The following description related to FIG. 18 relates to an example of the non-claimed inventions and thus is not part of the claimed invention.

The embodiment of the present invention further provides a first base station. FIG. 18 is a block diagram of a first base station according to the embodiment 4 of the present invention. As shown in FIG. 18, the first base station includes:
a third processor 1800; and
a third memory 1802, configured to store instructions executable by the third processor 1800.

The third processor 1800 is configured to perform, according to the instructions sored in the third memory 1802, the following operations:
receiving a connection resume request sent by a terminal, where the connection resume request includes a connection resume identification including identification information of a second base station;
sending a request message to the second base station according to the identification information; and
receiving a response message returned by the second base station for the request message, where the response message includes a radio bearer parameter of the terminal; and the radio bearer parameter includes at least one of a radio link control (RLC) parameter and a packet data convergence protocol (PDCP) parameter.

In a preferred implementation mode of the embodiment, the third processor is further configured to perform at least one of the following operations: checking data received from the terminal according to the RLC parameter in the response message; performing RLC encapsulation on data to be transmitted to the terminal according to the RLC parameter in the response message; checking the data received from the terminal according to the PDCP parameter in the response message; and performing PDCP encapsulation on the data to be transmitted to the terminal according to the PDCP parameter in the response message.

It is to be noted that the RLC parameter includes a parameter related to an RLC sequence number; and the PDCP parameter includes a parameter related to a PDCP sequence number and a parameter related to a superframe number.

An embodiment of the present invention further provides a storage medium. Optionally, in the embodiment, the storage medium may be configured to store program codes for executing the method for processing the radio bearer according to the embodiment 1 described above.

Alternatively, in the embodiment, the storage medium may be located in any one of a group of wireless communication terminals, or located in any one of a group of mobile terminals in a computer network.

Alternatively, in the embodiment, the storage medium is configured to store program codes for executing the steps described below.

In S1, a terminal sets a radio bearer parameter to a preset value according to a connection suspend instruction after receiving the connection suspend instruction sent by a base station; or the terminal sets the radio bearer parameter to the preset value in a process of initiating a radio connection resume. The process of initiating the radio connection resume by the terminal includes that the terminal sends a radio connection resume request to the base station and waits for a connection resume response of the base station; and the radio bearer parameter includes at least one of a radio link control (RLC) parameter and a packet data convergence protocol (PDCP) parameter.

An embodiment of the present invention further provides a storage medium. Optionally, in the embodiment, the storage medium may be configured to store program codes for executing the steps described below.

In S1, a base station sets a radio bearer parameter to a preset value in a process of sending a connection suspend instruction to a terminal; or the base station sets the radio bearer parameter to the preset value in a process of performing a radio connection resume. The process of performing the radio connection resume by the base station includes that the base station receives a connection resume request sent by the terminal and sends a connection resume response to the terminal. The radio bearer parameter includes at least one of a radio link control (RLC) parameter and a packet data convergence protocol (PDCP) parameter.

An embodiment of the present invention further provides a storage medium. Optionally, in the embodiment, the storage medium may be configured to store program codes for executing the steps described below.

In S1, a first base station receives a connection resume request sent by a terminal; where the connection resume request includes a connection resume identification including identification information of a second base station.

In S2, the first base station sends a request message to the second base station according to the identification information.

In S3, the first base station receives a response message returned by the second base station with respect to the request message; where the response message includes a radio bearer parameter of the terminal; and the radio bearer parameter includes at least one of a radio link control (RLC) parameter and a packet data convergence protocol (PDCP) parameter.

The serial numbers of the embodiments described above of the present invention are merely for ease of description and do not indicate superiority and inferiority of the embodiments.

In the embodiments described above of the present invention, the description of each embodiment has its own emphasis. For a part not described in detail in one embodiment, reference may be made to related description of other embodiments.

It should be understood that the technical content disclosed in the embodiments of the present application may be implemented in other ways. The device embodiments described above are merely illustrative. For example, a unit classification is merely a logical function classification, and, in practice, the unit classification may be implemented in other ways. For example, multiple units or components may be combined or may be integrated into another system, or some features may be ignored or not executed. Additionally, the presented or discussed mutual coupling, direct coupling or communication connections may be indirect coupling or communication connections via interfaces, units or modules, or may be electrical or in other forms.

The units described above as separate components may or may not be physically separated. Components presented as units may or may not be physical units, i.e., may be located in one place or may be distributed on multiple network units. Part or all of these units may be selected according to actual requirements to achieve objects of the solutions in the embodiments of the present invention.

Additionally, various functional units in each embodiment of the present invention may be integrated into one processing unit, or each unit may be physically present separately, or two or more units may be integrated into one unit. The integrated unit may be implemented by hardware or a software functional unit.

The integrated unit may be stored in a computer-readable storage medium if implemented in the form of a software functional unit and sold or used as an independent product. Based on this understanding, the solutions provided by the present invention substantially, or the part contributing to the existing art, may be embodied in the form of a software product. The computer software product is stored on a storage medium and includes several instructions for enabling a computer device (which may be a personal computer, a server, a network device or the like) to execute all or part of the steps in the methods provided by the embodiments of the present invention. The foregoing storage medium includes: a USB flash drive, a read-only memory (ROM), a random access memory (RAM), a mobile hard disk, a magnetic disk, an optical disk or another medium capable of storing program codes.

The above are only preferred embodiments of the present invention and are not intended to limit the present invention. For those skilled in the art, the present invention may have various modifications and variations.

### INDUSTRIAL APPLICABILITY

The technical solutions provided by the embodiments of the present invention may be applied to process the radio bearer. In the interaction of the terminal and the base station (for example, after the terminal receives the connection suspend instruction sent by the base station or in the process of initiating the radio connection resume by the terminal), the terminal and the base station set the radio bearer parameter including the RLC parameter and the PDCP parameter to the preset value according to the connection suspend instruction. The present invention solves the problem in the existing art that the base station and the terminal do not have a consistent RLC parameter and a consistent PDCP parameter on a radio bearer between the terminal and the base station resulting in a connection resume failure of the terminal, so the terminal needs more signaling interactions to establish the radio bearer which causes increased power consumption of the terminal, and ensures a consistent radio bearer parameter between the terminal and the base station, thereby improving a success rate of the connection resume between the terminal and the base station and avoiding more signaling interactions required by the terminal to establish the radio bearer.

## Claims

1. A method for processing a radio bearer, comprising:
setting (S402), by a terminal, a radio bearer parameter to a preset value in a process of initiating a radio connection resume by the terminal; wherein the initiating a radio connection resume by the terminal comprises: sending, by the terminal, a radio connection resume request to the base station and waiting for a connection resume response from the base station;
performing, by the terminal, data transmission and reception by using the set radio bearer parameter;
wherein the radio bearer parameter comprises at least one of a radio link control, RLC, parameter and a packet data convergence protocol, PDCP, parameter; and the preset value is an initial value or an agreed preset value.

2. The method of claim 1, wherein the performing, by the terminal, data transmission and reception by using the set radio bearer parameter comprises at least one of:
checking, by the terminal, received data by using a set RLC parameter; and
performing, by the terminal, RLC encapsulation on data to be transmitted by using the set RLC parameter.

3. The method of claim 1, wherein the performing, by the terminal, data transmission and reception by using the set radio bearer parameter comprises at least one of:
checking, by the terminal, received data by using a set PDCP parameter; and
performing, by the terminal, PDCP encapsulation on data to be transmitted by using the set PDCP parameter.

4. The method of any one of claims 1 to 3, wherein the RLC parameter comprises a parameter related to an RLC sequence number; and the PDCP parameter comprises a parameter related to a PDCP sequence number and a parameter related to a superframe number.

5. A method for processing a radio bearer, comprising:
setting (S502), by a base station, a radio bearer parameter to a preset value in a process of performing a radio connection resume by the base station; wherein the process of performing the radio connection resume by the base station comprises: receiving, by the base station, a connection resume request sent by the terminal and sending a connection resume response to the terminal;
performing, by the base station, data transmission and reception by using the set radio bearer parameter;
wherein the radio bearer parameter comprises at least one of a radio link control, RLC, parameter and a packet data convergence protocol, PDCP, parameter; and the preset value is an initial value or an agreed preset value.

6. The method of claim 5, wherein the performing, by the base station, data transmission and reception by using the set radio bearer parameter comprises at least one of:
checking, by the base station, received data by using a set RLC parameter; and
performing, by the base station, RLC encapsulation on data to be transmitted by using the set RLC parameter.

7. The method of claim 5, wherein the performing, by the base station, data transmission and reception by using the set radio bearer parameter comprises at least one of:
checking, by the base station, received data by using a set PDCP parameter; and
performing, by the base station, PDCP encapsulation on data to be transmitted by using the set PDCP parameter.

8. The method of any one of claims 5 to 7, wherein the RLC parameter comprises a parameter related to an RLC sequence number; and the PDCP parameter comprises a parameter related to a PDCP sequence number and a parameter related to a superframe number.

9. A device for processing a radio bearer, applied to a terminal, comprising:
a second setting module (72), configured to set a radio bearer parameter to a preset value in a process of initiating a radio connection resume; wherein the initiating a radio connection resume comprises: sending, by the terminal, a radio connection resume request to the base station and waiting for a connection resume response from the base station;
a first transceiver module (74), configured to perform data transmission and reception by using the set radio bearer parameter of the terminal;
wherein the radio bearer parameter comprises at least one of a radio link control, RLC, parameter and a packet data convergence protocol, PDCP, parameter; and the preset value is an initial value or an agreed preset value.

## Patentansprüche

1. Verarbeitungsverfahren für einen Funkträger, umfassend:
Einstellen (S402), durch ein Endgerät, eines Funkträgerparameters auf einen voreingestellten Wert in einem Initiierungsprozess einer Funkverbindungsfortsetzung durch das Endgerät; wobei das Initiieren einer Funkverbindungsfortsetzung durch das Endgerät Folgendes umfasst: Senden, durch das Endgerät, einer Funkverbindungsfortsetzungsanfrage an die Basisstation und Warten auf eine Verbindungsfortsetzungsantwort von der Basisstation;
Durchführen, durch das Endgerät, von Datenübertragung und -empfang unter Verwendung des eingestellten Funkträgerparameters;
wobei der Funkträgerparameter mindestens einen von einem RLC-Parameter (radio link control) und einem PDCP-Parameter (packet data convergence protocol) umfasst und der voreingestellte Wert ein Anfangswert oder ein vereinbarter voreingestellter Wert ist.

2. Verfahren nach Anspruch 1, wobei das Durchführen, durch das Endgerät, von Datenübertragung und -empfang unter Verwendung des eingestellten Funkträgerparameters mindestes eines von Folgendem umfasst:
Überprüfen, durch das Endgerät, von empfangenen Daten unter Verwendung eines eingestellten RLC-Parameters; und
Durchführen, durch das Endgerät, von RLC-Kapselung auf zu übertragenden Daten unter Verwendung des eingestellten RLC-Parameters.

3. Verfahren nach Anspruch 1, wobei das Durchführen, durch das Endgerät, von Datenübertragung und -empfang unter Verwendung des eingestellten Funkträgerparameters mindestens eines von Folgendem umfasst:
Überprüfen, durch das Endgerät, von empfangenen Daten unter Verwendung eines eingestellten PDCP-Parameters; und
Durchführen, durch das Endgerät, von PDCP-Kapselung auf zu übertragenden Daten unter Verwendung des eingestellten PDCP-Parameters.

4. Verfahren nach einem der Ansprüche 1 bis 3, wobei der RLC-Parameter einen Parameter, der eine RLC-Sequenznummer betrifft, umfasst; und der PDCP-Parameter einen Parameter, der eine PDCP-Sequenznummer betrifft, und einen Parameter, der eine Superrahmen-Nummer betrifft, umfasst.

5. Verarbeitungsverfahren für einen Funkträger, umfassend:
Einstellen (S502), durch eine Basisstation, eines Funkträgerparameters auf einen voreingestellten Wert in einem Prozess zum Durchführen einer Funkverbindungsfortsetzung durch die Basisstation; wobei der Prozess zum Durchführen der Funkverbindungsfortsetzung durch die Basisstation Folgendes umfasst: Empfangen, durch die Basisstation, einer von dem Endgerät gesendeten Verbindungsfortsetzungsanfrage und Senden einer Verbindungsfortsetzungsantwort an das Endgerät;
Durchführen, durch die Basisstation, von Datenübertragung und -empfang unter Verwendung des eingestellten Funkträgerparameters;
wobei der Funkträgerparameters mindestens einen von einem RLC-Parameter (radio link control) und einem PDCP-Parameter (packet data convergence protocol) umfasst und der voreingestellte Wert ein Anfangswert oder ein vereinbarter voreingestellter Wert ist.

6. Verfahren nach Anspruch 5, wobei das Durchführen, durch die Basisstation, von Datenübertragung und -empfang unter Verwendung des eingestellten Funkträgerparameters mindestens eines von Folgendem umfasst:
Überprüfen, durch die Basisstation, von empfangenen Daten unter Verwendung eines eingestellten RLC-Parameters; und
Durchführen, durch die Basisstation, von RLC-Kapselung auf zu übertragenden Daten unter Verwendung des eingestellten RLC-Parameters.

7. Verfahren nach Anspruch 5, wobei das Durchführen, durch die Basisstation, von Datenübertragung und -empfang unter Verwendung des eingestellten Funkträgerparameters mindestens eines von Folgendem umfasst:
Überprüfen, durch die Basisstation, von empfangenen Daten unter Verwendung eines eingestellten PDCP-Parameters; und
Durchführen, durch die Basisstation, von PDCP-Kapselung auf zu übertragenden Daten unter Verwendung des eingestellten PDCP-Parameters.

8. Verfahren nach einem der Ansprüche 5 bis 7, wobei der RLC-Parameter einen Parameter, der eine RLC-Sequenznummer betrifft, umfasst; und der PDCP-Parameter einen Parameter, der eine PDCP-Sequenznummer betrifft, und einen Parameter, der einen Superrahmen-Nummer betrifft, umfasst.

9. Verarbeitungsvorrichtung für einen Funkträger, die auf ein Endgerät angewendet wird, umfassend:
ein zweites Einstellmodul (72), das dazu konfiguriert ist, einen Funkträgerparameter auf einen voreingestellten Wert in einem Initiierungsprozess einer Funkverbindungsfortsetzung einzustellen; wobei das Initiieren einer Funkverbindungsfortsetzung Folgendes umfasst: Senden, durch das Endgerät, einer Funkverbindungsfortsetzungsanfrage an die Basisstation und Warten auf eine Verbindungsfortsetzungsantwort von der Basisstation;
ein erstes Senderempfängermodul (74), das dazu konfiguriert ist, Datenübertragung und -empfang unter Verwendung des eingestellten Funkträgerparameters des Endgeräts durchzuführen;
wobei der Funkträgerparameter mindestens einen von einem RLC-Parameter (radio link control) und einem PDCP-Parameter (packet data convergence protocol) umfasst und der voreingestellte Wert ein Anfangswert oder ein vereinbarter voreingestellter Wert ist.

## Revendications

1. Procédé de traitement d'un support radioélectrique, comprenant :
le réglage (S402), par un terminal, d'un paramètre de support radioélectrique à une valeur prédéfinie dans un processus de lancement d'une reprise de connexion radioélectrique par le terminal ; dans lequel le lancement d'une reprise de connexion radioélectrique par le terminal comprend : l'envoi, par le terminal, d'une demande de reprise de connexion radioélectrique à la station de base et l'attente d'une réponse de reprise de connexion à partir de la station de base ;
la réalisation, par le terminal, d'une transmission et d'une réception de données en utilisant le paramètre de support radioélectrique défini ;
dans lequel le paramètre de support radioélectrique comprend au moins un parmi un paramètre de commande de liaison radioélectrique, RLC, et un paramètre de protocole de convergence de données par paquets, PDCP ; et la valeur prédéfinie est une valeur initiale ou une valeur prédéfinie convenue.

2. Procédé selon la revendication 1, dans lequel la réalisation, par le terminal, d'une transmission et d'une réception de données en utilisant le paramètre de support radioélectrique défini comprend au moins une parmi :
la vérification, par le terminal, de données reçues en utilisant un paramètre RLC défini ; et
la réalisation, par le terminal, d'une encapsulation RLC sur des données à transmettre en utilisant le paramètre RLC défini.

3. Procédé selon la revendication 1, dans lequel la réalisation, par le terminal, d'une transmission et d'une réception de données en utilisant le paramètre de support radioélectrique défini comprend au moins une parmi :
la vérification, par le terminal, de données reçues en utilisant un paramètre PDCP défini ; et
la réalisation, par le terminal, d'une encapsulation PDCP sur des données à transmettre en utilisant le paramètre PDCP défini.

4. Procédé selon l'une quelconque des revendications 1 à 3, dans lequel le paramètre RLC comprend un paramètre relatif à un numéro de séquence RLC ; et le paramètre PDCP comprend un paramètre relatif à un numéro de séquence PDCP et un paramètre relatif à un numéro de super-trame.

5. Procédé de traitement d'un support radioélectrique, comprenant :
le réglage (S502), par une station de base, d'un paramètre de support radioélectrique à une valeur prédéfinie dans un processus de réalisation d'une reprise de connexion radioélectrique par la station de base ; dans lequel le processus de réalisation de la reprise de connexion radioélectrique par la station de base comprend : la réception, par la station de base, d'une demande de reprise de connexion envoyée par le terminal et l'envoi d'une réponse de reprise de connexion au terminal ;
la réalisation, par la station de base, d'une transmission et d'une réception de données en utilisant le paramètre de support radioélectrique défini ;
dans lequel le paramètre de support radioélectrique comprend au moins un parmi un paramètre de commande de liaison radioélectrique, RLC, et un paramètre de protocole de convergence de données par paquets, PDCP ; et la valeur prédéfinie est une valeur initiale ou une valeur prédéfinie convenue.

6. Procédé selon la revendication 5, dans lequel la réalisation, par la station de base, d'une transmission et d'une réception de données en utilisant le paramètre de support radioélectrique défini comprend au moins une parmi :
la vérification, par la station de base, de données reçues en utilisant un paramètre RLC défini ; et
la réalisation, par la station de base, d'une encapsulation RLC sur des données à transmettre en utilisant le paramètre RLC défini.

7. Procédé selon la revendication 5, dans lequel la réalisation, par la station de base, d'une transmission et d'une réception de données en utilisant le paramètre de support radioélectrique défini comprend au moins une parmi :
la vérification, par la station de base, de données reçues en utilisant un paramètre PDCP défini ; et
la réalisation, par la station de base, d'une encapsulation PDCP sur des données à transmettre en utilisant le paramètre PDCP défini.

8. Procédé selon l'une quelconque des revendications 5 à 7, dans lequel le paramètre RLC comprend un paramètre relatif à un numéro de séquence RLC ; et le paramètre PDCP comprend un paramètre relatif à un numéro de séquence PDCP et un paramètre relatif à un numéro de super-trame.

9. Dispositif de traitement d'un support radioélectrique, appliqué à un terminal, comprenant :
un second module de réglage (72) configuré pour régler un paramètre de support radioélectrique à une valeur prédéfinie dans un processus de lancement d'une reprise de connexion radioélectrique ; dans lequel le lancement d'une reprise de connexion radioélectrique comprend : l'envoi, par le terminal, d'une demande de reprise de connexion radioélectrique à la station de base et l'attente d'une réponse de reprise de connexion à partir de la station de base ;
un premier module émetteur-récepteur (74) configuré pour réaliser une transmission et une réception de données en utilisant le paramètre de support radioélectrique défini du terminal ;
dans lequel le paramètre de support radioélectrique comprend au moins un parmi un paramètre de commande de liaison radioélectrique, RLC, et un paramètre de protocole de convergence de données par paquets, PDCP ; et la valeur prédéfinie est une valeur initiale ou une valeur prédéfinie convenue.
